# EUROPÄISCHE PATENTSCHRIFT

(11) **EP 3 005 526 B1**
(45) Veröffentlichungstag und Bekanntmachung des Hinweises auf die Patenterteilung: **13.12.2017**
(21) Anmeldenummer: 14728347.7
(22) Anmeldetag: 23.05.2014
(51) Int. Cl.: H02J 7/02, B60L 11/18, H02M 7/48, H02J 50/12

(54) **SCHALTUNGSANORDNUNG FÜR DEN PRIMÄRTEIL EINES SYSTEMS ZUR KONTAKTLOSEN ENERGIEÜBERTRAGUNG, SOWIE ÜBERTRAGERELEMENT**
CIRCUIT ASSEMBLY FOR THE PRIMARY PART OF A SYSTEM FOR CONTACTLESS ENERGY TRANSFER, AND TRANSFORMER ELEMENT
AGENCEMENT DE CIRCUIT POUR LA PARTIE PRIMAIRE D'UN SYSTÈME DE TRANSMISSION D'ÉNERGIE SANS CONTACT, ET ÉLÉMENT DE TRANSMISSION

(30) Priorität: 29.05.2013 EP 13169729
(43) Veröffentlichungstag der Anmeldung: 13.04.2016
(73) Patentinhaber: BRUSA Elektronik AG, 9466 Sennwald (CH)
(72) Erfinder: KRAUSE, Axel, 9650 Nesslau (CH)
(74) Vertreter: Rösler, Frank
(86) Internationale Anmeldenummer: PCT/IB2014/061652
(87) Internationale Veröffentlichungsnummer: WO 2014/199255

(56) Entgegenhaltungen:
- WO-A1-2011/151038
- US-A- 6 160 374
- US-A1- 2011 254 377
- CHING-MING LAI: "Study and implementation of a high power factor single-stage contactless power supply with load/gap detection mechanisms", POWER ELECTRONICS SYSTEMS AND APPLICATIONS (PESA), 2011 4TH INTERNATIONAL CONFERENCE ON, IEEE, 8. Juni 2011 (2011-06-08), Seiten 1-5, XP031925350, DOI: 10.1109/PESA.2011.5982896 ISBN: 978-1-4577-0205-1

## Beschreibung

Die Erfindung betrifft eine Schaltungsanordnung für den Primärteil eines Systems zur kontaktlosen Energieübertragung, nach dem Oberbegriff des Anspruchs 1, sowie ein Übertragerelement als Primärteil für ein System zur kontaktlosen Energieübertragung auf ein Sekundärteil, nach dem Oberbegriff des Anspruchs 7.
In der WO2013/017200 ist ein elektronisches Gerät offenbart, insbesondere ein Übertragerkopf zur Versorgung des Antriebs eines zumindest teilweise elektrisch betriebenen Fahrzeuges auf Basis induktiver Energieübertragung. Dieses Gerät weist ein Gehäuse mit einer darin befindlichen Sekundärwicklung und einem integrierten Gleichrichter auf.
Die Primärseite jedoch, die aus dem Stromnetz gespeist wird und die Energie für den Betrieb und/oder das Laden des Energiespeichers der Sekundärseite zur Verfügung stellt, ist typischerweise aufgrund vieler verschiedener Baugruppen als Anordnung mehrerer getrennter Einheiten aufgebaut. Die Primärseite muss neben dem Netzanschluss noch einen oder mehrere der Baugruppen Eingangsfilter, Schutzschaltung, Gleichrichter, Leistungsfaktorkorrekturfilter, Aufwärtswandler, dann typischerweise DC/DC-Abwärtswandler, resonanter DC/AC Wandler, Hochfrequenz-Leitungen, sowie zumindest eine Primärspule aufweisen.
Eine derartige Anordnung ist auch in der US 2011/0254377 A1 offenbart. Darin ist ein System zur drahtlosen Ladung einer Batterie eines Elektrofahrzeuges beschrieben, als auch zur kontaktlosen Energieübertragung innerhalt des Fahrzeuges selbst. Die Primärspule, deren Versorgungselektronik als auch die Anbindung an ein Energieversorgungsnetz ist in separaten Baugruppen und auch baulich getrennt voneinander realisiert. Weiters offenbart die US 2011/0254377 A1 auch einen Wandler zur Ansteuerung einer Spule für die induktive Energieübertragung mit niederfrequentem Wechselstrom, bei der die Gleichstrom-Eingänge des Wandlers über einen Kondensator kurzgeschlossen sind und zu jeweils nachgeordneten, aktive gesteuerten Schaltern geführt sind, über welche die Primärspule des Energieübertragungssystems versorgt wird. Ein weiterer Ausgang der offenbarten Wandlerschaltung ist über jeweils eine Kapazität mit jeweils dem Eingang der Schaltung verbunden, deren zugeordneter Schalter gerade geöffnet ist.

Eine ähnliche Schaltung ist auch der WO 2011/151038 A1 zu entnehmen. Dieser Schaltungsvariante fehlen jedoch die Kapazitäten in der Verbindung zwischen dem ungeschalteten Eingang der Wandlerschaltung und der Sendespule des drahtlosen Energieübertragungssystems. Hingegen ist auch hier ein Kondensator vorgesehen, über den die beiden Eingänge des offenbarten Wandlers kurzgeschlossen sind.

Ein typischer Aufbau sieht eine Elektronik mit Lüftern für die Wandmontage vor, von welcher Hochfrequenz-Leitungen zu weiterer Elektronik am oder im Fussboden gehen, welche dann die Primärspule des unter dem Auto am oder im Fussboden, im Boden, in einer Fahrbahn od.dgl. speist.

In der EP 0814557 B1 ist ein tragbares Ladegerät offenbart, dessen Gehäuse in Form einer flachen Box vorliegt, die auf dem Boden unter dem Fahrzeug positioniert wird. Sie kann an eine genormte Netzsteckdose angeschlossen werden und enthält einen Hochfrequenzgenerator, eine Primärspule, die magnetisch koppelt mit einer Sekundärspule auf der Unterseite des Fahrzeugs. Die Box ist mit einer Führungseinrichtung für die korrekte Positionierung des Fahrzeugs ausgestattet, und bei korrekter Relativposition von Fahrzeug und Box wird ein Schalter zum Initiieren der induktiven Energieübertragung betätigt. Im Primärteil ist auch die Regelung der zu übertragenden Energie zu verwirklichen. Dazu umfasst der Primärteil typischerweise eine Spannungsregelungsvorrichtung.

In der Arbeit "Study and implementation of a high power factor single-stage contactless power supply with load/gap detection mechanisms" von Ching-Ming Lai, in den Proceedings der 4th International Conference on Power Electronics Systems and Applications (PESA), 2011, IEEE, 8. Juni 2011, Seiten 1 bis 5, ISBN:978-1-4577-0205-1, wird ein einstufiges kontaktloses Energieübertragungssystem vorgeschlagen, welches einen hohen Leistungsfaktor aufweist, mit Lücke und Lasterkennung . Die Schaltungstopologie stammt aus der Integration von einem Boost-Leistungsfaktorkorrektur-Wandler und einem seriellen resonanten Halbbrücken-Resonanzwechselrichter. Eine Methode, um die Lücke und Laständerung zu erfassen, basiert auf elektromagnetischer Induktion. Das vorgeschlagene berührungslosen Energiesystem ist in der Lage Energie und ein Signal gleichzeitig zu übertragen. Es weist die Vorteile der einfachen Struktur, geringen Anzahl von Komponenten, hohem Leistungsfaktor und geringen Stromoberschwingungen auf.

In der US 6160374 A ist ein einstufiges induktives Ladegerät offenbart, mit Leistungsfaktor-Korrektur, das verwendet werden kann, eine Last, wie beispielsweise Batterien eines Elektrofahrzeugs aufzuladen. Die einstufige Stromverarbeitung durch das induktive Ladesystem gewährleistet trotz Leistungsfaktorkorrektur und Leistungsregelung eine geringe Anzahl an Komponenten. Es erlaubt ein sanftes Schalten über die Netzspannung und den gesamten Leistungsbereich, was einen hohen Wirkungsgrad zur Folge hat. Das induktive Ladesystem nutzt den Stromquellen-Betrieb eines Serien-Parallel-Resonanzwandlers, mit Spannungsverstärkung zur Leistungsfaktorkorrektur über den volle Wechselstromnetz-Zyklus. Die Betriebsfrequenz des Wandlers ist um die Stromquellenfrequenz moduliert, um die Ausgangsleistung zwischen Null auf Volllast zu regulieren.

Aufgabe der vorliegenden Erfindung ist es somit, eine möglichst hohe Integration auch für den Primärteil eines Systems zur kontaktlosen Energieübertragung zu erreichen und diesen Primärteil zu diesem Zweck schaltungstechnisch und baulich zu vereinfachen. Auch die Mitnahme im Fahrzeug zur Verbindung mit üblichen Stromquellen an jedem beliebigen Ort soll damit ermöglicht werden.

Die Aufgabe wird durch die Merkmale der unabhängigen Ansprüche 1 bzw. 7 gelöst. Vorteilhafte Weiterbildungen sind in den Figuren und in den jeweils abhängigen Patentansprüchen dargelegt.

Typischerweise weist eine Schaltungsanordnung für den Primärteil eines Systems zur kontaktlosen Energieübertragung zumindest einen Netzanschluss, einen Gleichrichter, einen Aufwärtswandler, vorzugsweise mit Leistungsfaktorkorrekturfilter, einen resonanten DC/AC Wandler und Ausgänge zu zumindest einer Primärspule auf, gegebenenfalls auch ein Eingangsfilter und eine Schutzschaltung zwischen Netzanschluss und Gleichrichter.

Jedem Eingang des resonanten DC/AC-Wandlers ist je eine ansteuerbare Schaltanordnung nachgeschaltet, wobei jeder Eingang des Wandlers bei durchgängig geschalteter Schaltanordnung mit einer vorzugsweise zwischen Schaltanordnung und Ausgang des Wandlers angeordneten Kapazität und einem ersten Ausgang des Wandlers verbunden ist. Auch ist jeder Eingang des Wandlers bei gesperrt geschalteter Schaltanordnung mit einer Kapazität und einem zweiten Ausgang des Wandlers verbunden. Die Schaltanordnungen sind mit einer Steuerungselektronik verbunden, in welcher ein Ablauf zur Ansteuerung der Schaltanordnungen implementiert ist, der für einen Schaltzyklus nacheinander beide Schaltanordnungen durchgängig schaltet, wobei die jeweils andere Schaltanordnung gesperrt ist, Gemäss der Erfindung ist diese Anordnung zur Lösung der Aufgabe dadurch gekennzeichnet, dass der in der Steuerungselektronik implementierte Ablauf die Zykluszeit des Schaltzyklus in Abhängigkeit von der zu übertragenden Leistung in ganzzahligen Schritten verändert, wobei für höhere Leistung die Zykluszeit verlängert wird. Beispielsweise kann die Umschaltung mit einem Drittel oder einem Fünftel der Resonanzfrequenz erfolgen, entsprechend wird nur ein Drittel oder ein Fünftel der Frequenz übertragen und so die Leistung auf einen Drittel oder einen Fünftel des ursprünglichen Wertes reduziert. Dieser neuartige Aufbau macht die Spannungsregelung durch beispielsweise einen DC/DC-Abwärtswandler unnötig, da die übertragene Leistung bei konstanter Spannung durch eine Veränderung der Anregung des resonanten Wandlers mittels der Schaltanordnungen geregelt werden kann. Durch die veränderbare Anregung des resonanten Wandlers des Primärteils kann trotz konstanter anliegender Spannung mittels einer vereinfachten und baulich kleineren Schaltung die übertragene Leistung stufenweise geregelt werden.

Bevorzugt ist dabei vorgesehen, dass der Resonanzkreis mit der Oberwelle der Umschaltfrequenz des Wandlers schwingt.

Vorzugsweise ist dabei weiters vorgesehen, dass in der Steuerungselektronik ein Ablauf zur Ansteuerung der Schaltanordnungen implementiert ist, der die Schaltanordnungen für gleiche Anteile an der Zykluszeit durchgängig schaltet bzw. sperrt. Besonders bevorzugt ist es dabei, wenn jede Schaltanordnung im Wesentlichen die halbe Zykluszeit offen oder gesperrt geschaltet ist.

Vorteilhafterweise ist der resonante DC/AC-Wandler unmittelbar dem Aufwärtswandler nachgeschaltet und wird von diesem mit Gleichspannung versorgt werden. Durch diese Einsparung einer Baugruppe ist die Voraussetzung geschaffen, dass der Grossteil der elektrischen und elektronischen Bauteile zusammen mit der oder jeder Primärspule in einem gemeinsamen Gehäuse untergebracht werden kann. Damit können auch die teuren Hochfrequenz-Leitungen zwischen Elektronik und Primärspule vermieden werden, was mehr Flexibilität und einen grösseren Installationsradius ermöglicht und die elektromagnetische Verträglichkeit verbessert.

Vorzugsweise erfolgt die Ansteuerung der Schaltelemente so, dass sie im Nulldurchgang des Stromes ein- und ausgeschaltet werden, um die Verluste zu minimieren. Unter bestimmten Gegebenheiten ergibt sich dabei eine Umschaltfrequenz, die von der Resonanzfrequenz abweicht, was aber durchaus erwünscht ist. Diese Auslegung der Steuerungselektronik ergibt eine optimale Ausnutzung der eingespeisten Energie mit einfacher Regelungsmöglichkeit.

Eine Reduktion der Leistung auf die Hälfte lässt sich auf einfache Weise erreichen, indem einer der Ausgänge des Wandlers durchgehend mit beiden Eingängen des Wandlers verbunden ist, und in der Steuerungselektronik ein Ablauf implementiert ist, der durch entsprechende Ansteuerung der Schaltanordnungen den zweiten Ausgang des Wandlers wechselweise mit einem der beiden Eingänge des Wandlers verbindet.

Zur Lösung der eingangs gestellten Aufgabe ist auch ein Übertragerelement als Primärteil für ein System zur kontaktlosen Energieübertragung auf ein Sekundärteil geeignet, welches eine Schaltungsanordnung nach zumindest einem der vorhergehenden Absätze umfasst, die in einem gemeinsamen Gehäuse untergebracht ist. Dies umfasst zumindest eine Energieversorgung sowie die Ansteuerelektronik für die Primärspule.

Für eine noch grössere Integration und verbesserte Mitnahmemöglichkeit zur Verwendung des Primärteils an einem beliebigen Platz, der nur über eine Stromquelle verfügen muss, ist zusätzlich jede Primärspule im gemeinsamen Gehäuse untergebracht.

Wenn bei einer vorteilhaften Ausführungsform des Übertragerelementes zumindest ein wärmeleitendes Element, vorzugsweise Kupfer- oder Aluminiumplatten, das Gehäuse mit zumindest einem der darin angeordneten Bauteile verbindet, kann durch Kontakt des Gehäuses mit einer kühlen Fläche eine für den Ladezyklus ausreichende Kühlung des Primärteils gewährleistet werden. Die kühle Fläche kann beispielsweise der Boden unterhalb eines zu ladenden Elektrofahrzeuges sein. Um die Lokal anfallende Wärme der elektrischen und elektronischen Bauteile im Übertragerelement über die gesamte Fläche der Platten zu verteilen und so optimal an den Boden abzugeben, können die Platten mit Hohlkanälen ausgestattet sein, in denen ein Medium zum Wärmetransport zirkuliert, vorzugsweise Luft oder Wasser.

Ein vorteilhaftes Übertragerelement ist dadurch gekennzeichnet, dass die im Gehäuse angeordnet Schaltungsanordnung mit einem Anschluss für eine herkömmliche Stromversorgung versehen ist. Damit kann in einfacher Weise der Primärteil an jeder beliebigen herkömmlichen Stromquelle betrieben werden, was die höchstmögliche Flexibilität für den Betrieb des Primärteils bietet.

Als weitere alternative Ausführungsform kann ein Übertragerelement dadurch gekennzeichnet sein, dass der Innenraum des Gehäuses eine Vergussmasse aufweist, welche die darin enthaltenen Bauteile umgibt. Damit kann einerseits die Wärmeübertragung und die Spannungsfestigkeit erhöht werden, anderseits kann auch die mechanische Festigkeit und die Widerstandfähigkeit gegenüber mechanischen Beanspruchungen wesentlich verbessert werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: ein elektrisches Schaltbild eines herkömmlichen Primärteils gemäss dem Stand der Technik,
- Fig. 2: ein elektrisches Schaltbild eines erfindungsgemässen Primärteils,
- Fig. 3: eine schematische Draufsicht auf eine Ausführungsform eines erfindungsgemässen Primärteils,
- Fig. 4: einen Schnitt entlang der Linie A-A der Fig. 3, und
- Fig. 5: einen Schnitt entlang der Linie B-B der Fig. 3.

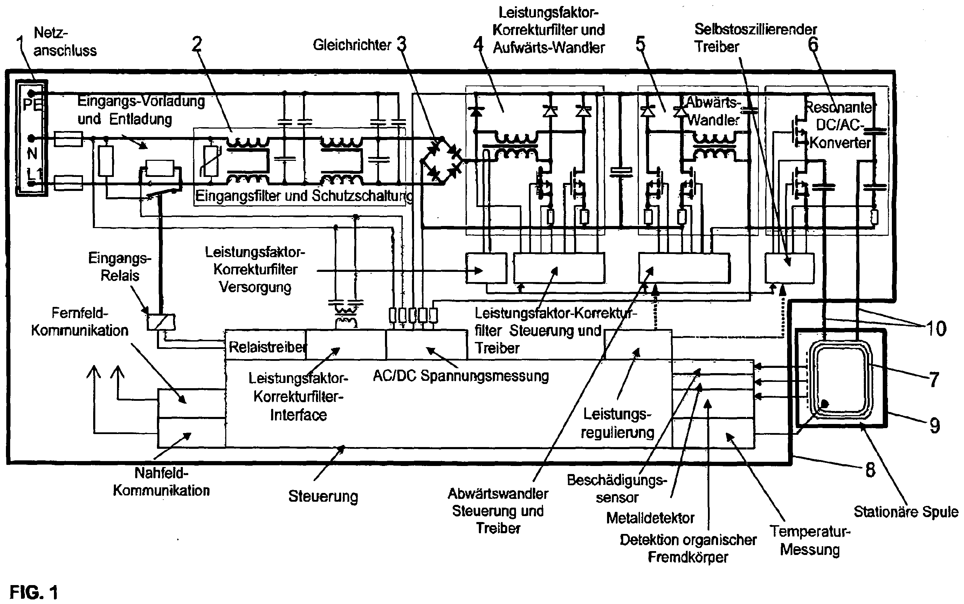

Fig. 1 zeigt die Baugruppen eines Primärteils, wie er beispielsweise in einem System zur kontaktlosen Energieübertragung Anwendung findet. Derartige Systeme kommen etwa zum kontaktlosen Laden der Traktionsbatterien von Elektrofahrzeugen zum Einsatz, wo die Energie zum Laden der Batterie durch die Primärspule des Primärteils nach dem Prinzip eines Transformators auf die Sekundärspule übertragen und dort in einen Ladestrom für die Batterie umgewandelt wird.

Der Primärteil, der auch für die Regelung der übertragenen Energie sorgen muss, umfasst typischerweise und wie in Fig. 1 erkennbar einen Netzanschluss 1, ein Eingangsfilter und eine Schutzschaltung, vorzugsweise durch eine gemeinsamen Baugruppe 2 realisiert, einen Gleichrichter 3, ein Leistungsfaktorkorrekturfilter 4, allenfalls einen Aufwärtswandler, einen DC/DC-Abwärtswandler 5, einen resonanten DC/AC- Wandler 6, und zumindest eine Primärspule 7. Herkömmliche Systeme verteilen diese Baugruppen auf mehrere, zumindest zwei, baulich getrennte Einheiten 8, 9, die über Energie- und/oder Datenleitungen miteinander verbunden sind. Vom resonanten DC/AC-Wandler 6 zur separaten Primärspule 7 müssen sogar teure und empfindliche Hochfrequenz-Leitungen 10 vorgesehen sein.

Die in einem ersten Gehäuse 8 zusammengefasste Einheit umfasst üblicherweise zumindest den Netzanschluss 1 und die zugehörige Elektronik 2, d.h. zumindest ein Eingangsfilter und die Schutzschaltung, sowie Lüfter. Die Einheit 8 ist meist für die Wandmontage ausgelegt.

Oftmals ist weitere Elektronik in das erste Gehäuse 8 integriert, wie etwa der Gleichrichter 3, ein Leistungsfaktorkorrekturfilter 4, wenn vorhanden der Aufwärtswandler, der DC/DC-Abwärtswandler 5 sowie der resonante DC/AC-Wandler 6.

Ein Leistungsfaktorkorrekturfilter 4 ist eine elektrische oder elektronische Schaltung, welche den sogenannten Leistungsfaktor erhöht, damit dieser in einem gesetzlich vorgegebenen Bereich bleibt.

Vom ersten Gehäuse 8 führen Hochfrequenz-Leitungen 10 zu einem zweiten Gehäuse 9, welche zumindest eine Primärspule 7 umfasst. Dieses zweite Gehäuse 9 ist typischerweise unterhalb eines zu ladenden Elektrofahrzeuges platziert, auf dem Fussboden einer Garage oder Ladestation liegend, im Boden unterhalb eines Abstellplatzes des Fahrzeuges eingelassen, od. dgl.

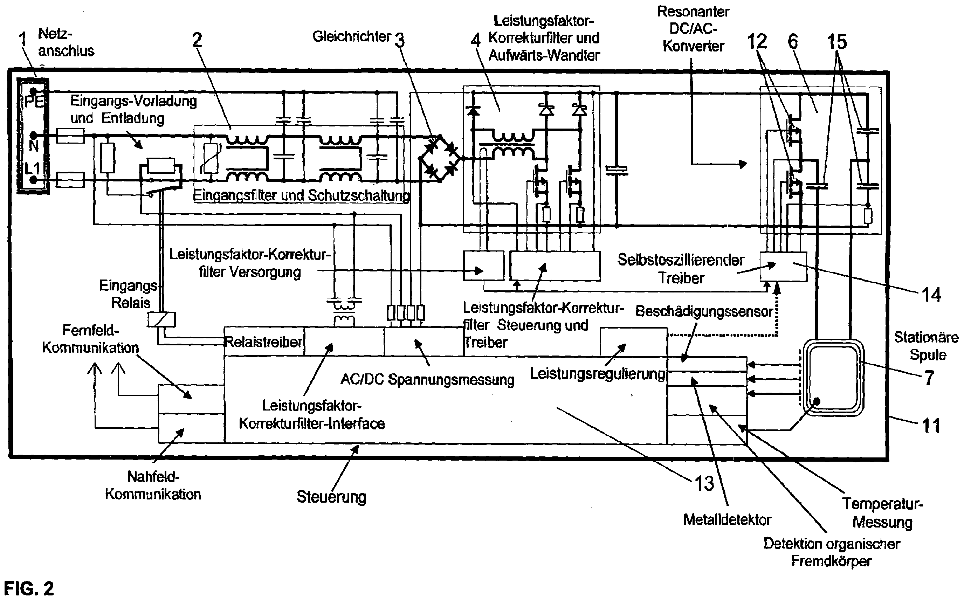

Durch die erfindungsgemässe Ausbildung der Schaltungsanordnung wie beispielsweise bei dem in Fig. 2 dargestellten Ausführungsbeispiel können bestimmte Elektronikbaugruppen entfallen und kann damit Bauraum eingespart werden. Das wiederum erlaubt die weitergehende Integration von Primärspule 7 und vorzugsweise gesamter Elektronik in einem gemeinsamen Gehäuse 11, das nur mehr zur Verbindung mit einer externen Stromquelle, beispielsweise einer herkömmlichen Steckdose, ausgelegt und ausgestattet ist.

So wird beim Ausführungsbeispiel der Erfindung gemäss der Fig. 2 kein DC/DC-Abwärtswandler (in Fig. 1 mit dem Bezugszeichen 5 gekennzeichnet) benötigt und ist daher weggefallen, ebenso wie frei liegende teure Hochfrequenz-Leitungen (in Fig. 1 mit 10 gekennzeichnet). Neben der weitestgehenden Integration aller Bauteile des Primärteils in einem Gehäuse 11 für eine einfache und leichte Transportmöglichkeit des Primärteils als auch hohe Flexibilität in dessen Positionierung an beliebigen Ladestationen ist auch die elektromagnetische Verträglichkeit durch Vermeidung langer Hochfrequenz-Leitungen verbessert.

Im Gehäuse 11 des Übertragerelementes des Primärteils kann zumindest ein wärmeleitendes Element die darin hauptsächlich durch die Spule 7 und die Elektronik erzeugte Wärme nach aussen hin ableiten, beispielsweise an den Boden oder die umgebende Luft abgeben. Wärmeleitende Elemente können vorzugsweise Kupfer- oder Aluminiumplatten sein, die das Gehäuse 11 mit zumindest einem der darin angeordneten Bauteile verbinden. Um die lokal anfallende Wärme der elektronischen Bauteile über die gesamte Fläche der wärmeleitenden Elemente zu verteilen, sind diese vorzugsweise mit Hohlkanälen ausgestattet, in denen ein Medium zum Wärmetransport, wie etwa Luft oder Wasser, zirkuliert.

Ein erfindungsgemässes Übertragerelement kann als Primärteil eines kontaktlosen Ladesystems durch den hohen Grad der Integration auch unmittelbar an jeder beliebigen herkömmlichen Stromquelle betrieben werden. Dazu ist lediglich ein entsprechender Anschluss der im Gehäuse 11 angeordneten Schaltungsanordnung vorzusehen, beispielsweise ein Steckerverbindung zu einem 220V oder 230V-Netz.

Der Innenraum des Gehäuses 11 kann mit einer Vergussmasse verfüllt sein, welche die darin enthaltenen Bauteile umgibt, um Wärmeübertragung und die Spannungsfestigkeit als auch mechanische Festigkeit und die Widerstandfähigkeit gegenüber mechanischen Beanspruchungen wesentlich zu verbessern.

Um trotz der Vereinfachung der Schaltung eine zumindest stufenweise Einstellung der vom Primärteil als magnetisches Wechselfeld abgegebenen Energie zu ermöglichen, ist jedem Eingang des resonanten DC/AC-Wandlers 6 je eine ansteuerbare Schaltanordnung 12 nachgeschaltet, die jede über eine gemeinsame Steuerungseinheit 13, gegebenenfalls unter Einbeziehung eines selbstoszillierenden Treibers 14, betätigbar ist. Nachfolgend auf die Schaltanordnungen 12 und vor einem ersten Ausgang des Wandlers 6 ist eine beiden Schaltanordnungen 12 zugeordnete Kapazität 15 angeordnet. Somit ist jeder Eingang des Wandlers 6 bei durchgängig geschalteter und ihm nachgeordneter Schaltanordnung 12 über eine Kapazität 15 mit einem ersten Ausgang des Wandlers 6 verbunden. Jedem Eingang des Wandlers 6 ist aber auch über eine weitere Kapazität 15 mit dem zweiten Ausgang des Wandlers 6 verbunden. Somit ist bei ihm zugeordneter und gesperrt geschalteter Schaltanordnung 12 dieser Eingang des Wandlers 6 über die weitere Kapazität 15 mit einem zweiten Ausgang des Wandlers 6 verbunden.

Diese Kombination von Schaltungsanordnungen 12, Kapazitäten 15 nachgeschaltet den Schaltanordnungen 12 als auch den Eingängen des Wandlers 6, und der Anordnung aus Steuerungseinheit 13 und Treiber 14 erlaubt eine Beeinflussung der Anregung des resonanten DC/AC-Wandlers 6, welche die übertragene Leistung bestimmt. Eine Spannungsregelung durch beispielsweise einen DC/DC-Abwärtswandler kann damit vermieden werden, so dass der resonante DC/AC-Wandler 6 unmittelbar dem Aufwärtswandler 4 nachgeschaltet sein und von diesem mit Gleichspannung versorgt werden kann.

In der Steuerungselektronik, umfassend zumindest die Steuerungseinheit 13 und den selbstoszillierenden Treiber 14, ist vorteilhafterweise ein Ablauf zur Ansteuerung der Schaltanordnungen 12 implementiert, gemäss dem abwechselnd je eine der Schaltanordnungen 12 durchgängig geschaltet und die jeweils andere Schaltanordnung 12 gesperrt geschaltet ist.

Die Steuerungseinheit 13 zusammen mit dem Treiber 14 sorgt für einen Ablauf zur Ansteuerung der Schaltanordnungen 12, bei welchem für einen Schaltzyklus nacheinander beide Schaltanordnungen 12 durchgängig geschaltet werden, vorzugsweise für gleiche Anteile an der Zykluszeit des Schaltzyklus. Der Schaltzyklus ist unabhängig von der Resonanzfrequenz des von Primärspule 7 und Kapazitäten 15 gebildeten resonanten Schwingkreises für die induktive Energieübertragung. Insbesondere wird dabei jede der beiden Schaltanordnung 12 für im Wesentlichen die halbe Zykluszeit offen bzw. geschossen geschaltet.

Vorzugsweise erfolgt die Ansteuerung der Schaltelemente der Schaltanordnungen 12 derart, dass sie im Nulldurchgang des Stromes ein- und ausgeschaltet werden, was die Verluste minimiert. Dabei kann es auch vorkommen, dass die Umschaltfrequenz, die von der Resonanzfrequenz des resonanten Wandlers 6 abweicht, was aber durchaus erwünscht ist, um trotz einfacher Regelung die eingespeiste Energie optimal auszunützen.

So kann beispielsweise eine Reduktion der Leistung auf die Hälfte erreichen, indem durch entsprechende Ansteuerung der Schaltanordnungen 12 der über die Kapazitäten 15 mit den Eingängen des Wandlers 6 verbundene Ausgang des Wandlers 6 konstant mit dem Eingang verbunden bleibt und nur der andere Ausgang abwechselnd, vorzugsweise mit dem für volle Energieübertragung vorgesehenen Schaltzyklus, über die jeweils offen geschaltete Schaltanordnung 12 mit dem einen oder anderen Eingang des Wandlers 6 verbunden wird.

Die Zykluszeit kann auch in Abhängigkeit von der zu übertragenden Leistung in ganzzahligen Schritten verändert werden, wobei der Resonanzkreis mit einer Oberwelle der Umschaltfrequenz des Wandlers 6 schwingt. So kann die Umschaltung mit einem Drittel oder einem Fünftel der Resonanzfrequenz des Wandlers 6 erfolgen, und entsprechend wird nur ein Drittel oder ein Fünftel der Leistung vom Primärteil auf den Sekundärteil übertragen.

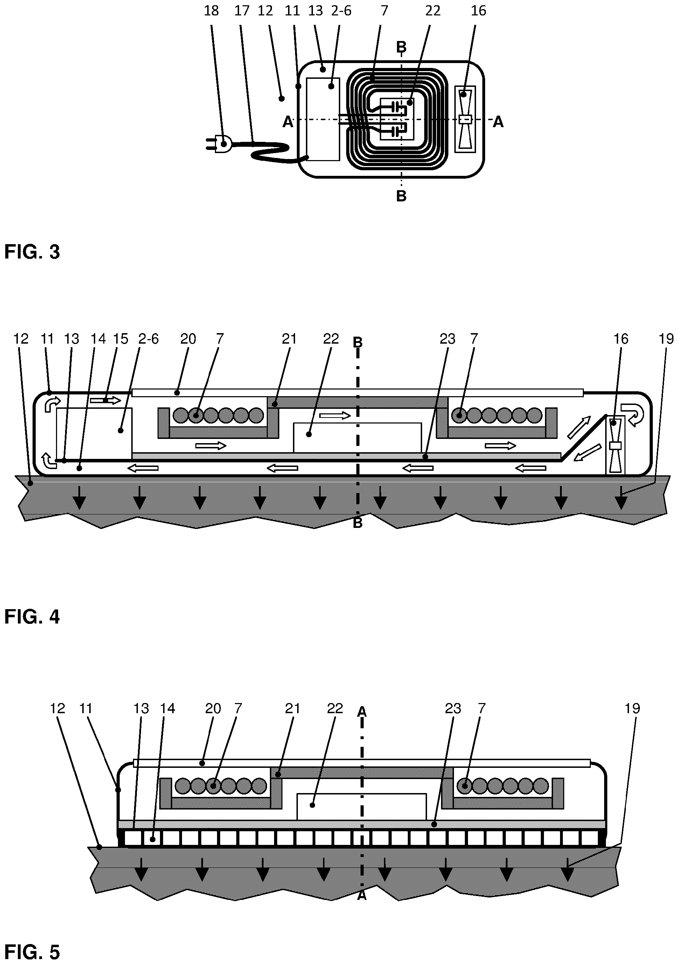

In Bezug auf die Fig. 3 bis 5 sollen nachfolgend ein vorteilhafter Aufbau sowie die Funktion eines erfindungsgemässen Primärteils in Form einer Ladeplatte für ein Elektrofahrzeug erläutert werden.

Das gemeinsame Gehäuse 11 des Primärteils ist in Form einer im Wesentlichen quaderförmigen, vorzugsweise rechteckigen und in einer Dimension gegenüber den anderen Abmessungen dünnen Platte geformt. Auch abgerundete, elliptische oder kreisrunde Formgebung ist möglich, vorzugsweise mit entsprechender Formgebung der Primärspule 7. Das Gehäuse 11 ist vorzugsweise mit dem Fussboden 12 thermisch und vorzugsweise auch mechanisch verbunden, könnte auch in den Fussboden 12 eingelassen sein. Doch sind auch transportable und an beliebigen Positionen am Boden ablegbare Gehäuse 11 möglich.

Das Gehäuse 11 ist allseitig geschlossen oder zumindest verschliessbar und besteht aus einem gut wärmeleitenden, vorzugsweise metallischen Material wie etwa Aluminium, oder aus einem mechanisch hoch belastbaren Kunststoff, der auch das Gewicht eines Fahrzeuges tragen kann. Es ist mit einer im Innern angebrachten und strukturierten Metallplatte 13 versehen, in welcher Kühlkanäle 14 ausgebildet sind, in welchen ein Kühlmittel, vorzugsweise Luft, in einem geschlossenen Kreislauf - symbolisiert durch die mit 15 bezeichneten Pfeile - zirkuliert. Dieser Kreislauf 15 wird durch den Ventilator 16 unterstützt oder angetrieben.

Auf der Metallplatte 13 sind elektronische Baugruppen 2 bis 6 angeordnet, beispielsweise Gleichrichter 3, Hochsetzsteller, Leistungsfaktorkorrekturfilter 4, DC/DC-Abwärtswandler 5, Wechselrichter und resonanter DC/AC-Wandler 6, die ihre Energie über ein Netzkabel 17 mit Netzstecker 18 direkt vom Wechselstromnetz beziehen und ihre Abwärme an die Metallplatte 13 abgeben. Diese Abwärme wird von der Kühlluft im Kreislauf 15 aufgenommen und bei Durchströmung der Kühlkanäle 14 an den Boden 12 oder allenfalls die Umgebungsluft abgegeben (symbolisiert durch die Pfeile 19).

Das Gehäuse 11 hat an seiner in Gebrauchsstellung dem Sekundärteil zugewandten Seite, im dargestellten Fall eines auf dem Fussboden 12 liegenden oder daran montierten Platte oben, eine Öffnung, welche durch eine nichtmetallische Platte 20 luft- und wasserdicht abgedeckt ist. Unter dieser Platte 20 befindet sich die Anordnung zur kontaktlosen Übertragung der Energie auf den Sekundärteil, bestehend vorzugsweise aus der Primärspule 7 und vorzugsweise einem Ferritschirm 21 und einem Resonanzkondensator 22, welcher elektrisch und thermisch durch eine Isolierplatte 23 von der metallischen Platte 13 isoliert ist, um insbesondere den hohen auftretenden Resonanzspannungen gerecht zu werden und einen Rückfluss der Wärme nach oben zu verhindern. Diese Anordnung mit dem Resonanzkreis wird durch die im Gehäuse 11 zirkulierende Abluft der elektronischen Baugruppen gekühlt.

### Bezugszeichenliste

- 1: Netzanschluss
- 2: Eingangsfilter und Schutzschaltung
- 3: Gleichrichter
- 4: Leistungsfaktorkorrekturfilter
- 5: DC/DC-Abwärtswandler
- 6: Resonanter DC/AC-Wandler
- 7: Primärspule
- 8: Erstes Gehäuse
- 9: Zweites Gehäuse
- 10: Hochfrequenz-Leitungen
- 11: Gemeinsames Gehäuse des Primärteils
- 12: Schaltanordnung
- 13: Steuerungseinheit
- 14: Selbstoszillierender Treiber
- 15: Kapazität

## Patentansprüche

1. Schaltungsanordnung für den Primärteil eines Systems zur kontaktlosen Energieübertragung, umfassend zumindest einen Netzanschluss (1), einen Gleichrichter (3), einen Aufwärtswandler (4), vorzugsweise ein Leistungsfaktorkorrekturfilter, einen resonanten DC/AC Wandler (6) und Ausgänge zu zumindest einer Primärspule (7), gegebenenfalls ein Eingangsfilter und eine Schutzschaltung (2) zwischen Netzanschluss (1) und Gleichrichter (3), wobei jedem Eingang des resonanten DC/AC-Wandlers (6) je eine ansteuerbare Schaltanordnung (12) nachgeschaltet ist, wobei jeder Eingang des Wandlers (6) bei durchgängig geschalteter Schaltanordnung (12) mit einer vorzugsweise zwischen Schaltanordnung (12) und Ausgang des Wandlers (6) angeordneten Kapazität (15) und einem ersten Ausgang des Wandlers (6) verbunden ist, und wobei jeder Eingang des Wandlers (6) bei gesperrt geschalteter Schaltanordnung (12) mit einer Kapazität (15) und einem zweiten Ausgang des Wandlers (6) verbunden ist, und wobei die Schaltanordnungen (12) mit einer Steuerungselektronik (13, 14) verbunden sind, in welcher ein Ablauf zur Ansteuerung der Schaltanordnungen (12) implementiert ist, der für einen Schaltzyklus nacheinander beide Schaltanordnungen (12) durchgängig schaltet, wobei die jeweils andere Schaltanordnung (12) gesperrt ist, **dadurch gekennzeichnet, dass** der in der Steuerungselektronik (13,14) implementierte Ablauf die Zykluszeit des Schaltzyklus in Abhängigkeit von der zu übertragenden Leistung in ganzzahligen Schritten verändert, wobei für höhere Leistung die Zykluszeit verlängert wird.

2. Schaltungsanordnung nach Anspruch 1, **dadurch gekennzeichnet, dass** der Resonanzkreis mit der Oberwelle der Umschaltfrequenz des Wandlers (6) schwingt.

3. Schaltungsanordnung nach Anspruch 1 oder 2, **dadurch gekennzeichnet, dass** der in der Steuerungselektronik (13,14) implementierte Ablauf die Schaltanordnungen für gleiche Anteile an der Zykluszeit durchgängig schaltet bzw. sperrt, insbesondere jede Schaltanordnung (12) im Wesentlichen die halbe Zykluszeit.

4. Schaltungsanordnung nach einem der Ansprüche 1 bis 3, **dadurch gekennzeichnet, dass** der resonante DC/AC-Wandler (6) unmittelbar dem Aufwärtswandler (4) nachgeschaltet ist und von diesem mit Gleichspannung versorgt wird.

5. Schaltungsanordnung nach einem der Ansprüche 1 bis 4, **dadurch gekennzeichnet, dass** der in der Steuerungselektronik (13, 14) implementierte Ablauf die Schaltanordnungen (12) derart ansteuert, dass sie im Nulldurchgang des Stromes ein- und ausgeschaltet werden, gegebenenfalls mit einer von der Resonanzfrequenz abweichenden Umschaltfrequenz.

6. Schaltungsanordnung nach einem der Ansprüche 1 bis 5, **dadurch gekennzeichnet, dass** einer der Ausgänge des Wandlers (6) durchgehend mit beiden Eingängen des Wandlers (6) verbunden ist, und in der Steuerungselektronik (13, 14) ein Ablauf implementiert ist, der durch entsprechende Ansteuerung der Schaltanordnungen (12) den zweiten Ausgang des Wandlers (6) wechselweise mit einem der beiden Eingänge des Wandlers (6) verbindet.

7. Übertragerelement als Primärteil für ein System zur kontaktlosen Energieübertragung auf ein Sekundärteil, umfassend zumindest eine Primärspule (7) und eine Energieversorgung und Ansteuerelektronik (2 bis 15) für die Primärspule (7), **dadurch gekennzeichnet, dass** eine Schaltungsanordnung nach zumindest einem der Ansprüche 1 bis 6 in einem gemeinsamen Gehäuse (11) untergebracht ist.

8. Übertragerelement nach Anspruch 7, **dadurch gekennzeichnet, dass** zusätzlich jede Primärspule (7) im gemeinsamen Gehäuse (11) untergebracht ist.

9. Übertragerelement nach Anspruch 7 oder 8, **dadurch gekennzeichnet, dass** zumindest ein wärmeleitendes Element, vorzugsweise Kupfer- oder Aluminiumplatten, das Gehäuse (11) mit zumindest einem der darin angeordneten Bauteile (2 bis 15) verbindet.

10. Übertragerelement nach Anspruch 9, **dadurch gekennzeichnet, dass** zumindest ein wärmleitendes Element mit Hohlkanälen ausgestattet ist, in denen ein Medium zum Wärmetransport zirkuliert.

11. Übertragerelement nach zumindest einem der Ansprüche 7 bis 10, **dadurch gekennzeichnet, dass** die im Gehäuse (11) angeordnete Schaltungsanordnung (2 bis 15) mit einem Anschluss (1) für eine herkömmliche Stromversorgung versehen ist.

12. Übertragerelement nach zumindest einem der Ansprüche 7 bis 11, **dadurch gekennzeichnet, dass** der Innenraum des Gehäuses (11) eine Vergussmasse aufweist, welche die darin enthaltenen Bauteile (1 bis 15) umgibt.

## Claims

1. Circuit arrangement for the primary part of a system for contactless energy transfer, comprising at least one mains supply connection (1), a rectifier (3), a step-up converter (4), preferably a power factor correction filter, a resonant DC/AC converter (6) and outputs to at least one primary coil (7), possibly an input filter and a protection circuit (2) between mains supply connection (1) and rectifier (3), wherein downstream of each input of the resonant DC/AC converter (6) one controllable switching arrangement (12) each is connected, wherein when the switching arrangement (12) is switched to the transmitting state each input of the converter (6) is connected to a capacitance (15), preferably arranged between switching arrangement (12) and output of the converter (6), and to a first output of the converter (6), and wherein when the switching arrangement (12) is switched to the blocking state, each input of the converter (6) is connected to a capacitance (15) and to a second output of the converter (6), and wherein the switching arrangements (12) are connected to a control electronics (13, 14), in which a procedure for controlling the switching arrangements (12) is implemented, which for a switching cycle switches both switching arrangements (12) to the transmitting state one after the other, wherein the respective other switching arrangement (12) is disabled,
**characterized in that**
the procedure implemented in the control electronics (13, 14) changes the cycle time of the switching cycle in integer steps depending on the power to be transmitted, wherein for higher power, the cycle time is extended.

2. Circuit arrangement according to Claim 1,
**characterized in that**
the resonant circuit oscillates at the harmonic of the switching frequency of the converter (6).

3. Circuit arrangement according to Claim 1 or 2,
**characterized in that**
the procedure implemented in the control electronics (13, 14) switches the switching arrangements to the transmitting or blocking state for equal proportions of the cycle time, in particular each switching arrangement (12) for essentially half the cycle time.

4. Circuit arrangement according to any one of Claims 1 to 3,
**characterized in that**
the resonant DC/AC converter (6) is connected directly downstream of the step-up converter (4) and is supplied with DC voltage by the latter.

5. Circuit arrangement according to any one of Claims 1 to 4,
**characterized in that**
the procedure implemented in the control electronics (13, 14) controls the switching arrangements (12) in such a way that they can be switched on and off in the zero crossing of the current, possibly at a switching frequency which is different from the resonance frequency.

6. Circuit arrangement according to any one of Claims 1 to 5,
**characterized in that**
one of the outputs of the converter (6) is continuously connected to both inputs of the converter (6), and a procedure is implemented in the control electronics (13, 14) which, by means of appropriate control of the switching arrangements (12), connects the second output of the converter (6) alternately to one of the two inputs of the converter (6).

7. Transfer element as a primary part of a system for contactless energy transfer to a secondary part, comprising at least one primary coil (7) and a power supply and control electronics (2 to 15) for the primary coil (7),
**characterized in that**
a circuit arrangement according to at least one of Claims 1 to 6 is accommodated in a common housing (11) .

8. Transfer element according to Claim 7,
**characterized in that**
in addition, each primary coil (7) is accommodated in a common housing (11).

9. Transfer element according to Claim 7 or 8,
**characterized in that**
at least one thermally conductive element, preferably copper or aluminium plates, connects the housing (11) to at least one of the components (2 to 15) arranged therein.

10. Transfer element according to Claim 9,
**characterized in that**
at least one thermally conductive element is equipped with hollow channels, in which a heat transport medium circulates.

11. Transfer element according at least to one of Claims 7 to 10,
**characterized in that**
the circuit arrangement (2 to 15) arranged in the housing (11) is provided with a connector (1) for a conventional power supply.

12. Transfer element according at least to one of Claims 7 to 11,
**characterized in that**
the interior of the housing (11) comprises a potting compound, which surrounds the components (1 to 15) contained therein.

## Revendications

1. Circuit pour la partie primaire d'un système pour la transmission d'énergie sans contact, comprenant au moins un raccordement au secteur (1), un redresseur (3), un convertisseur-élévateur (4), de préférence un filtre de correction de facteur de puissance, un convertisseur CC/CA résonant (6) et des sorties vers au moins une bobine primaire (7), le cas échéant un filtre d'entrée et un circuit de protection (2) entre le raccordement au secteur (1) et le redresseur (3), dans lequel on monte en aval de chaque entrée du convertisseur CC/CA résonant (6) respectivement un dispositif de commutation (12) pouvant être commandé, dans lequel, en cas de dispositif de commutation (12) commuté à l'état passant, chaque entrée du convertisseur (6) est en liaison avec une capacité (15), de préférence disposée entre le dispositif de commutation (12) et une sortie du convertisseur (6), et avec une première sortie du convertisseur (6) et dans lequel, en cas de dispositif de commutation (12) commuté à l'état bloqué, chaque entrée du convertisseur (6) est en liaison avec une capacité (15) et une deuxième sortie du convertisseur (6), et dans lequel les dispositifs de commutation (12) sont en liaison avec une électronique de commande (13, 14) dans laquelle un déroulement pour la commande des dispositifs de commutation (12) est implémenté, lequel, pour un cycle de commutation, commute les deux dispositifs de commutation (12) l'un après l'autre à l'état passant, dans lequel l'autre dispositif de commutation (12) respectif est bloqué,
**caractérisé en ce que** le déroulement implémenté dans l'électronique de commande (13, 14) modifie, par pas entiers, la durée de cycle du cycle de commutation en fonction de la puissance à transmettre, dans lequel, pour une puissance plus élevée, la durée de cycle est allongée.

2. Circuit selon la revendication 1, **caractérisé en ce que** le circuit résonant oscille avec l'onde harmonique de la fréquence de commutation du convertisseur (6).

3. Circuit selon la revendication 1 ou 2, **caractérisé en ce que** le déroulement implémenté dans l'électronique de commande (13, 14) commute les dispositifs de commutation, à parts égales de la durée de cycle, à l'état passant ou bloqué, en particulier chaque dispositif de commutation (12), sensiblement pour la moitié de la durée de cycle.

4. Circuit selon l'une des revendications 1 à 3,
**caractérisé en ce que** le convertisseur CC/CA résonant (6) est monté directement en aval du convertisseur-élévateur (4) et est alimenté par celui-ci en tension continue.

5. Circuit selon l'une des revendications 1 à 4,
**caractérisé en ce que** le déroulement implémenté dans l'électronique de commande (13, 14) commande les dispositifs de commutation (12) de manière à ce qu'ils soient allumés et éteints au passage par zéro du courant, le cas échéant avec une fréquence de commutation qui diverge de la fréquence de résonance.

6. Circuit selon l'une des revendications 1 à 5,
**caractérisé en ce que** l'une des sorties du convertisseur (6) est en liaison continue avec les deux entrées du convertisseur (6) et un déroulement est implémenté dans l'électronique de commande (13, 14), lequel, grâce à une commande correspondante des dispositifs de commutation (12), relie tour à tour la deuxième sortie du convertisseur (6) à l'une des deux entrées du convertisseur (6).

7. Elément de transmission en tant que partie primaire pour un système pour la transmission d'énergie sans contact sur une partie secondaire, comprenant au moins une bobine primaire (7) et une alimentation en énergie et une électronique de commande (2 à 15) pour la bobine primaire (7), **caractérisé en ce qu'**un dispositif de commutation selon l'une au moins des revendications 1 à 6 est logé dans un boîtier (11) commun.

8. Elément de transmission selon la revendication 7,
**caractérisé en ce que** chaque bobine primaire (7) est additionnellement logée dans le boîtier (11) commun.

9. Elément de transmission selon la revendication 7 ou 8,
**caractérisé en ce qu'**au moins un élément thermoconducteur, de préférence des plaques de cuivre ou d'aluminium, relie le boîtier (11) à au moins l'un des composants (2 à 15) qui y sont disposés à l'intérieur.

10. Elément de transmission selon la revendication 9,
**caractérisé en ce qu'**au moins un élément thermoconducteur est doté de canaux creux dans lesquels circule un milieu pour le transport de chaleur.

11. Elément de transmission selon l'une au moins des revendications 7 à 10, **caractérisé en ce que** le dispositif de commutation (2 à 15) disposé dans le boîtier (11) est doté d'un raccordement (1) pour une alimentation électrique usuelle.

12. Elément de transmission selon l'une au moins des revendications 7 à 11, **caractérisé en ce que** l'espace intérieur du boîtier (11) présente une masse de scellement qui entoure les composants (1 à 15) contenus à l'intérieur.
